# EUROPEAN PATENT APPLICATION

(11) **EP 4 614 314 A1**
(43) Date of publication of application: **10.09.2025**
(21) Application number: 24161999.8
(22) Date of filing: 07.03.2024
(51) Int. Cl.: G06F 8/65, G06N 3/00, G06N 20/00, G06F 40/00

(54) **MANAGING CHANGES TO A COMPUTING ENVIRONMENT**

(71) Applicant: Barclays Execution Services Limited, London, Greater London E14 5HP (GB)
(72) Inventor: BALL, Lewis, London, E14 5HP (GB); RANCHOR, Ronak, London, E14 5HP (GB)
(74) Representative: Carpmaels & Ransford LLP

(57) **Abstract**

There is provided a computer-implemented method for handling updates to a computing environment, the method comprising: receiving, from a user, a change request comprising a text description justifying a change in hardware and/or software within the computing environment; applying natural language processing to the text description to extract one or more text features from the text description; performing a validation check of the received change request by applying a trained classification model to the extracted one or more text features, the classification model having been trained on a dataset of historical change requests; and if the received change request fails the validation check, preventing submission of the change request into a queue of change requests and/or implementation of the change associated with the change request.

## Description

### Technical Field

The present disclosure relates generally to handling updates to a computer environment, and in particular, to processing a text description associated with a change request with machine learning techniques to determine whether the change request can be queued and/or the change associated with the change request can be implemented.

### Background

In some instances, it is necessary to implement new software updates, which can include configuring a piece of hardware to operate in a different way, or new hardware updates. As an example, to make such an update to software, it can occasionally be necessary to reboot the hardware infrastructure (e.g. rebooting a server) so that the new software can be installed.

However, there are risks associated with rebooting hardware infrastructure, due to unexpected server downtime, during which the server (and the software running on the server) is unavailable to access. Moreover, in an environment where external users access software running on said server, it is important that the software update does not lead to any bugs or faults in the software.

Thus, it is important to have mechanisms for preventing any negative effects associated with software updates in advance of implementing the software update or submitting the software update into a queue.

US 2022-0405397A1 is concerned with the detection of supply chain-related security threats to software applications. It provides a method that includes identifying differences between updated source code and previous source code. The updated source code corresponds to an updated version of an application. The previous source code corresponds to a previous version of the application. A risk score is determined for the updated version. The risk score is based on a machine learning (ML) risk model. The ML risk model analyses the differences between the updated source code and the previous source code. A value of the risk score corresponds to potential security threats that are associated with the updated version. The potential security threats are not associated with the previous version of the application. The risk score is provided to interested parties.

One drawback to such an approach is the high amount of complexity and specificity required for the respective machine learning models, particular due to the requirement to process differences between two versions of code, which are written in a certain programming language. In addition, due to the wide variety of available programming techniques, the accuracy of said approach is limited in utility by the ability to train said machine learning model.

US20230004486A1 describes a system that can identify data stored in repositories that indicate changes in the version of the application relative to a prior version of the application tested or deployed before receipt of the request to test the performance of the version of the application. The system can determine, based on the data and using machine learning with historical data associated with applications tested or deployed to test performance of the version, and without execution of the tests, a score for a plurality of tests that test performance of the version of the application. The system can select, based on the scores, a subset of the tests to execute, and provide an indication of the selected subset of the tests to cause execution of the subset of the tests to evaluate performance of the version of the application prior to deployment of the version of the application.

This approach relies on an adaptive, Al driven tool (interposed between a software testing module and a deployment module) for predicting success or failure of individual regression tests (by determining a score). However, this approach still requires that a subset of regression tests be performed on the basis of these scores. Put another way, the AI tool of this approach is looking to improve the accuracy of regression test selection. One drawback of this approach is that the machine learning model will only be particularly accurate in evaluating software changes which match the historical data used for training the model, and so any brand new software change is likely to not be appropriate for this approach. In addition, such a solution also requires lengthy regression testing to be performed, even if a subset of tests is selected.

Moreover, such approaches also are only applicable to incremental software updates, not hardware changes, and are not able to easily capture the purpose and risk of the update, especially outside of the specific software application.

The present invention seeks to overcome these drawbacks and reduce the processing required for determining risk of a software change, including non-incremental software updates. Additionally, the present invention seeks to be able to determine risk of a hardware change.

### Summary

The present invention is defined by the independent claims, with further optional features being defined by the dependent claims.

In a first aspect of the invention, there is provided a computer-implemented method for handling updates to a computing environment, the method comprising: receiving, from a user, a change request comprising a text description justifying a change in hardware and/or software within the computing environment; applying natural language processing to the text description to extract one or more text features from the text description; performing a validation check of the received change request by applying a trained classification model to the extracted one or more text features, the classification model having been trained on a dataset of historical change requests; and if the received change request fails the validation check, preventing submission of the change request into a queue of change requests and/or implementation of the change associated with the change request.

Such a process is advantageous because it provides a mechanism for identifying risky updates to the computing environment and preventing said updates from being implemented/queued. Put another way, depending on text features (e.g. the presence of certain words) of the text description, the classification model can determine how risky the change request is by outputting a validation check. If the validation check is acceptable (i.e. the risk is below an acceptable threshold), the classification model can output an indication of allowability. Otherwise, if the change request is deemed to be risky by the validation check, prevention of further steps can be taken.

It may be understood that a change request refers to instructions (or code) for initiating a change to the computing environment (such as a software update to a server).

Because the change request also comprises a text description, which is written by the user (e.g. the programmer) to explain the purpose of the change, the text description can offer a more accurate idea of the potential consequences of the change than may be evident from the source code. Moreover, because the text description is written in a human language, as opposed to a programming language, standard natural language processing techniques can be implemented to extract text features (which can be indicative of the riskiness of changes and convey information which would otherwise not be derivable from, e.g. a source code). The use of discrete text features as the inputs to a machine learning model is improved over the known solutions (which may involve using entire portions of source code differences as machine learning model inputs), in that the complexity and specificity of the machine learning model is greatly reduced. In particular, using text features reduces complexity because it allows for user input and feedback as part of an automated validation procedure. It allows a user to submit data in a standard human language with low complexity (e.g. plain English), which can then be processed quickly to identify risk, and does not require more specific processing of different programming language. Moreover, reduced specificity allows the risk of changes to different software, in different programming languages, to be determined by the same machine learning model, as well as changes to hardware.

For the avoidance of doubt, a classification model can include one or more machine learning models (such as a neural network). The model can first be trained, by using labelled input and output training data (e.g. a set of inputs, each with a known output, or label), so as to learn a certain relationship between the input and output training data. The classification model can then be utilised to predict a new output on the basis of a new input. In view of this, the types of training data used to train the classification model define the sorts of relationships which can be learned.

With the above in mind, the trained classification model is suitable for receiving the extracted one or more text features as inputs, and outputting a validation check result (e.g. a pass/fail). Thus, the data used to train such a classification model will also include a set of one or more text features as inputs, pre-labelled with validation check results, so as to train the model to act in the way required.

In other words, the training data is in the same format as the input data to the trained model. Thus, the classification model is trained by applying extracted one or more text features of the dataset of historical change requests, which are labelled, to an untrained model.

In some embodiments, the extracted one or more text features form part of a feature vector, and wherein applying the trained classification model to the extracted one or more text features comprises applying the trained classification model to the feature vector.

A feature vector refers to an n-dimensional vector of numerical features that represent some object, in this instance the extracted text features. Such a feature vector is advantageous in machine learning, because a numerical representation of objects facilitates the processing and statistical analysis steps.

For the avoidance of doubt, where the trained classification model is applied to such a feature vector, analogous feature vectors from the dataset of historical change requests are also used for training.

In some embodiments, a vector representing a change justification category further forms part of the feature vector, the change justification category indicating a reason for the change in hardware and/or software within the computing environment.

Having a change justification category further forming part of the input to the classification model is advantageous because the accuracy of the classification model can be further improved. Put another way, the classification model can rely not only on the text features as parameters for the validation check, but also on certain categories which may be known to increase riskiness.

For example, the category could be an indication of a high security risk software update. If there is such a flag for high security risks, the classification model could be taught to prioritise the category of risk over the extracted text features. As another example, the classification model could be trained to have different standards for the extracted text features depending on the classification (e.g. for a high security risk classification, they may be a higher benchmark for description and documentation of the change before the model will output a pass result with the validation check).

For the avoidance of doubt, where the trained classification model is applied to such a feature vector including a vector representing a change justification category, analogous feature vectors from the dataset of historical change requests are also used for training.

In some embodiments, the received change request comprises the change justification category, wherein the method further comprises applying a one-hot encoding to the change justification category to generate a vector representing the change justification category.

One-hot encoding refers to a method for representing data. A "one-hot" refers to a group of bits in which there is a single "high" bit (all other bits being "low"). Thus, the one-hot can be used to quickly identify categorical data based on the specific "high bit". This is advantageous, because many machine learning models need their input variables to be numeric, and in such instances, categorical variables need to be transformed into a format suitable for input.

Thus, the received change request can include an indication of a change justification category, which can be encoded into a one-hot for processing through the classification model, and improvement of the classification outputs.

In some embodiments, the change justification category of a respective change request is one of: first-party driven, oversight, third-party driven, and security or safety threat.

Such categories are advantageous because they may be associated with different levels of risks with certain types of software and/or hardware changes. For example, if a change request is marked with a category indicating a fix for a safety threat, the validation check can take this flag into account when determining whether to prevent submission of the change request into a queue or implementation of the change associated with the change request.

In some embodiments, each change request in the dataset of historical change requests has been pre-labelled as either passing or failing the validation check.

Such labelling of data can be done manually or automatically, based on the known consequences of implementing the associated hardware or software change.

In some embodiments, the dataset of historical change requests comprises data related to the performance of one or more changes associated with one or more change requests that were submitted previously.

In some embodiments, preventing submission of the change request into a queue of change requests and/or implementation of the change associated with the change request comprises at least one of: limiting relevant access control to the user and requesting manual approval of the change associated with the change request.

In some cases, it may be advantageous to have an override system in cases of urgency or management of false-negatives output by the validation check. In other words, there may be instances in which the classification model has, on the basis of the extracted one or more text features, prevented submission/implementation of the change. Nevertheless, for urgent cases where software updates are critical and need urgent implementation, a manual approval system can be used to override the prevention and allow submission/implementation of the change (e.g. enabling the user to submit the change request into the queue of change requests by permitting relevant access control to the user).

The manual override can include any number of authentication methods (including, e.g. an input of an override passcode or password).

In some embodiments, the method further comprises: if the received change request fails the validation check, performing at least one of: generating and outputting feedback regarding why the change request failed the validation check based on attributes identified by the classification model as contributing to the failure; generating a suggestion for revising the text description of the change request based on identified features by the classification model as contributing to the failure determination; and outputting a prompt to the user to revise the text description of the change request.

It may be advantageous to have additional consequences to a failed validation check, for the sake of providing active guidance to the user. Thus, providing feedback and context to why the validation check failed can help improve the descriptions of risky software/hardware changes, and explain context for risky changes which may not have been considered by the person who created the change request. In this way, the method can help highlight potential risks associated with the change which were not considered by the user.

In addition, the generation of a suggestion for an alternative text description may be advantageous for helping the user to understand the amount of detail required to justify risky software or hardware changes.

In some cases, a prompt can be provided to allow for revision of the text description, which can then automatically be inserted into the classification model a further time for an updated validation check.

In some embodiments, the method further comprises: if the received change request passes the validation check, enabling the user to submit the change request into the queue of change requests by permitting relevant access control to the user.

In this way, the method of the present invention can be used to control the implementation of the change associated with the change request by allowing access control to the queue of change request.

In some embodiments, the classification model comprises a random forest algorithm, and performing the validation check of the received change request comprises: processing the extracted one or more text features by each of a plurality of decision trees in the random forest algorithm so as to output a plurality of classification decisions; calculating a score based on an aggregation of the plurality of classification decisions; and determining that the change request passes the validation check if the calculated score meets a predetermined threshold, or determining that the change request fails the validation check if the calculated score does not meet the predetermined threshold.

A random forest algorithm refers to an ensemble learning method for classification and regression. It operates by constructing a multitude of "decision trees" (a hierarchical model that uses a tree-like model of decisions and their possible consequences), and for classification tasks, the output of the random forest is the class selected by most trees.

In some embodiments, applying natural language processing comprises at least one of: applying a regular expression replacer to the text description, performing tokenisation of the text description, performing stopword removal of the text description, performing stemming of the text description, performing text cleaning of the text description, performing part-of-speech tagging of the text description, performing named entity recognition of the text description, performing sentiment analysis of the text description, performing Term Frequency-Inverse Document Frequency analysis of the text description, applying a dictionary counter to the text description, and applying a regular expression counter to the text description.

A regular expression (regex) replacer is one which replaces regex patterns with tokens. This may be used to replace an email, a URL, a month, a day name, a month, ordinals, and numbers with respective tokens. This is advantageous because it improves model generalisation. For example, valid records may mention certain dates/links/email addresses etc. which are valid features, but the model is able to use a regex replacer to identify that one of these is used, rather than the specific value of one person's email address.

A tokenisation process is able to split text based on certain delimiting characters (e.g.".", ",", "?", "!", ";"). This allows for sentences in the text description to be analysed individually.

Stopword removal of the text description refers to the removal of highly occurring words in the document (e.g. "a", "an", "the", "is", "was", "will", "would", etc.). The reason for the removal of these words is that they may appear in significant quantities in the text, but provide relatively little information and are therefore ranked relatively lowly in their importance during natural language processing. Thus, removal of these words results in much less text data and leads to faster processing. Fewer features also results in a more robust classification model.

Stemming of the text description refers to processes for removing affixes of works, and processing the root of a modified word (e.g. a gerund, past particle). As an example, the words "sending" and "sent" are not functionally different from the root word "send", and so the stemming process removes such modifications to focus on the root word.

Text cleaning of the text description refers to sentence cleaning functions (e.g. lowercases the sentences, removes non-alphanumeric characters and removes excess whitespace) and word cleaning functions (lowercases the words, removes non-alphanumeric characters and removes excess whitespace). Such cleaning of text data reduces the number of tokens, avoids punctuation, emojis, URLs, etc. which may confuse a natural language processing model, and reduces noise in the natural language processing process.

Part-of-speech tagging of the text description refers to identification of certain types of text as a certain grammatical category (e.g. preposition, noun, verb, adjective, etc.).

Named entity recognition of the text description refers to extracting information from text. It involves detecting and categorising important information in text known as named entities. Named entities can refer to the key subjects of a piece of text, such as names, locations, companies, events and products.

Sentiment analysis of the text description refers to the identification of a view or emotion behind a text. In other words, the text can be analysed to find the emotion or intent behind a piece of text. It can therefore be used to indicate a positive, negative, or neutral tone present in the text.

Term Frequency-Inverse Document Frequency (tf-idf) analysis of the text description refers to a statistical method in natural language processing. It measures how important a term is within a document relative to a collection of documents. Term Frequency refers to the number of times in which a term appears in the document relative to the total number of words. Inverse Document Frequency refers to the proportion of documents in a collection of documents that contain the term. The Frequency-Inverse Document Frequency analysis is calculated by multiplied the Term Frequency and the Inverse Document Frequency. As a result, importance of a term is high when it occurs a lot in a given document and rarely in others. In other words, commonality within a document measured by Term Frequency is balanced by rarity between documents measured by Inverse Document Frequency. In the context of the present disclosure, a term having a high idf value indicates that the term is relatively important and should be treated accordingly by a natural language processing model (e.g. "Database" will have a higher idf value than "good", in the text description)

Applying a dictionary counter to the text description refers to counting the number of dictionary words that occur in the text, as well as the number of stop words. It also determines the fraction of all words that fit into either of these categories. The dictionary here can use the nltk standard (a standard Python library) words corpus, and the stopwords can be standard nltk stopwords. Such a counter can be useful in identifying junk text in the text description which should be removed.

Applying a regular expression counter to the text description refers to a capability to count the number of times a certain regular expression (regex) pattern occurs. This is advantageous because it is useful for picking up certain features in the text like 'number of servers mentioned', number of 'change tickets mentioned' etc.

In some embodiments, the method further comprises: if the received change request passes the validation check, implementing the change associated with the change request.

In this way, the method can be used to fully automate the process of implementing changes. That is, if the validation check is passed, the change can be implemented automatically without further input from the user.

In some embodiments, the method further comprises: updating the classification model based on an outcome resulting from implementing the change associated with the change request.

By feeding back additional data to the classification model (e.g. whether a particular software and/or hardware change caused issued during implementation), the classification model can continuously learn to improve its validation checks, further reducing the risk of inappropriate or unjustified changes.

In a second aspect of the invention, there is provided a computing environment comprising: one or more computing systems communicatively coupled to each other; and at least one processing system configured to perform any of the above embodiments of the first aspect of the invention.

In a third aspect of the invention, there is provided a (non-transitory) computer readable medium which, when processed by the processing system, causes the processing system to perform any of the above embodiments the first aspect of the invention.

### Brief Description of the Drawings

Embodiments of the invention are described below, by way of example, with reference to the following drawings, in which:
Figure 1 is a block diagram illustrating the components of an automated validation system.
Figure 2A is a flowchart depicting the steps of a software upgrade, which is an example of a change to software and/or hardware.
Figure 2B is a flowchart depicting the steps of an automated validation process.
Figure 3 is a table of exemplary natural language processing techniques that can be applied to the text description.
Figure 4A is a diagram showing a machine learning model during training.
Figure 4B is a diagram showing a trained machine learning model during operation.
Figure 4C is a diagram showing a tree architecture of a certain machine learning model.
Figure 5 is a flowchart illustrating the steps involved in updating the classification model based on the outcome of the implemented change.
Figure 6 is an example of a user interface for submitting a change request and receiving feedback or suggestions.
Figure 7A shows a computing device in which the methods of the invention may be implemented.
Figure 7B shows components of the system memory of the computing device of Figure 7A in further detail.
Figure 7C shows components of the storage media of the computing device of Figure 7A.
Figure 8 shows a generic enterprise architecture for use with the present invention.

### Detailed Description

The detailed description set forth below provides information and examples of the disclosed technology with sufficient detail to enable those skilled in the art to practice the disclosure.

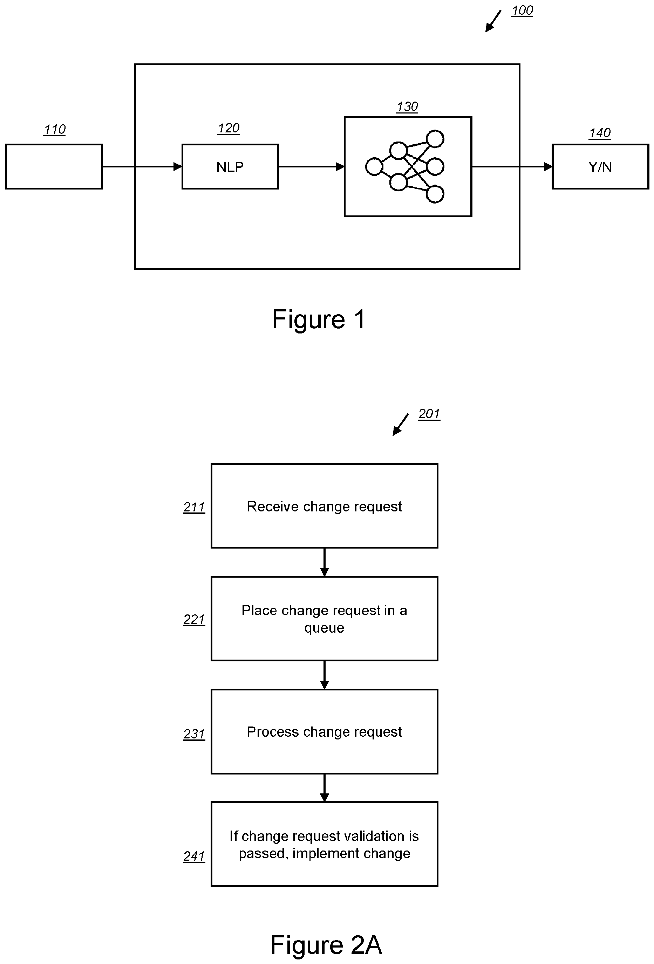

Figure 1 shows a block diagram illustrating the components of the automated validation system 100. The system 100 includes a change request input 110, a natural language processing (NLP) component 120, a trained classification model 130, and a validation check outcome 140.

The change request input 110 receives a change request from a user, which includes a text description justifying a change in hardware and/or software within the computing environment. The change request input 110 may also include a change justification category, such as first-party driven, oversight, third-party driven, security or safety threat, or any other suitable category.

The natural language processing (NLP) component 120 processes the text description received from the change request input 110. The NLP component 120 applies various techniques to extract one or more text features from the text description, such as tokenization, stopword removal, stemming, text cleaning, part-of-speech tagging, named entity recognition, sentiment analysis, Term Frequency-Inverse Document Frequency (TF-IDF) analysis, dictionary counter, and regular expression counter.

The trained classification model 130 receives the extracted text features from the NLP component 120 and performs a validation check on the change request. The classification model 130 has been trained on a dataset of historical change requests, which may include data related to the performance of one or more changes associated with one or more change requests that were submitted previously. The classification model 130 may utilize a random forest algorithm or any other suitable machine learning algorithm.

The validation check outcome 140 determines whether the change request passes or fails the validation check based on the results from the trained classification model 130. If the change request fails the validation check, the outcome 140 prevents submission of the change request and may generate feedback, suggestions, or prompts for the user to revise the text description. If the change request passes the validation check, the outcome 140 allows submission of the change request and may implement the change associated with the change request.

Figure 2A is a flowchart depicting the steps of a software upgrade, which is an example of a change to software and/or hardware. The process 201 begins with receiving a change request from a user (step 211). The change request may then be placed into a queue of requests (step 221), and then can be processed (step 231) for implementation (step 241) at a certain time. The processing may include any number of validation processes for ensuring the software upgrade associated with the change request does not have any negative impacts. The act of implementing the change request can include installing a new piece of software, which may include, e.g. reinstalling an operating system, updating a version of code, etc. It may be necessary for hardware associated with the software upgrade to be taken offline to allow the upgrade to be implemented. Although the flowchart depicted in Figure 2A pertains to a software upgrade, it should be noted that the same steps are used for other types of software and/or hardware changes.

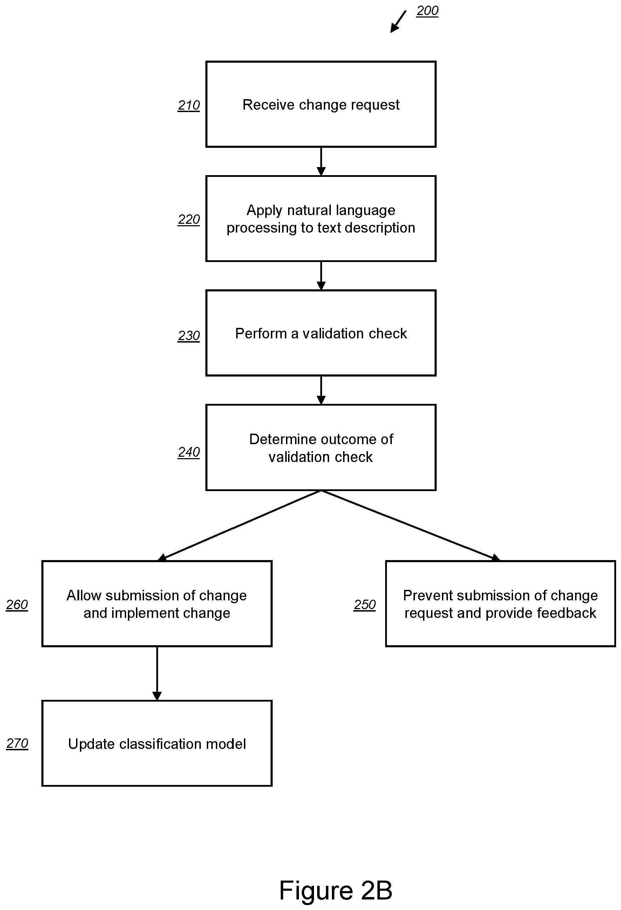

Figure 2B is a flowchart depicting the steps of the automated validation process 200. The process 200 begins with receiving a change request from a user (step 210). The process 200 then applies natural language processing to the text description (step 220) and performs a validation check using the trained classification model (step 230). The process 200 determines the outcome of the validation check (step 240). If the change request fails the validation check, the process 200 prevents submission of the change request and provides feedback or suggestions (step 250). If the change request passes the validation check, the process 200 allows submission of the change request and implements the change (step 260). The process 200 may also update the classification model based on the outcome of the implemented change (step 270).

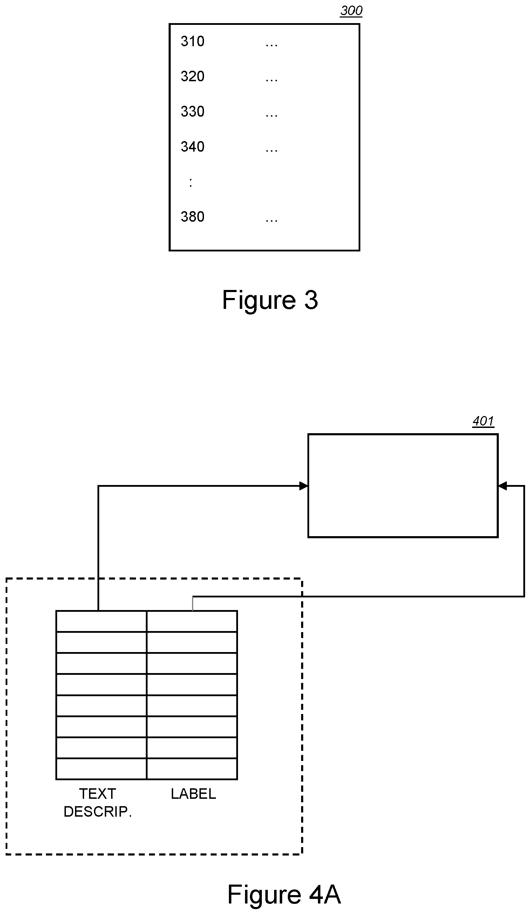

Figure 3 is a table of certain natural language processing techniques 300 that can be applied to the text description. The techniques 300 may include regular expression replacer 310, tokenization 320, stopword removal 330, stemming 340, text cleaning 350, part-of-speech tagging 360, named entity recognition 370, sentiment analysis 380, TF-IDF analysis 390, dictionary counter 395, and regular expression counter 397. These techniques can be performed in the order shown in the table to generate inputs for the classification model. However, it is entirely possible that only a subset of the natural language processing techniques are implemented (i.e. one or more techniques, including all) by the natural language processing, or that the techniques are performed in a different order than is shown.

Figure 4A is a block diagram showing how an untrained classification model 401 can be trained. As shown, the model is configured to receive change requests with text descriptions having one or more text features, wherein the change requests are labelled to indicate whether the validation check should be passed or failed. The one or more text features can be pre-processed through similar NLP techniques, and presented to the untrained classification model as inputs. The corresponding labels can be presented to the output of the classification model for the purpose of supervised learning (so that the model can learn to associate a certain set of processed text description features with a validation check output).

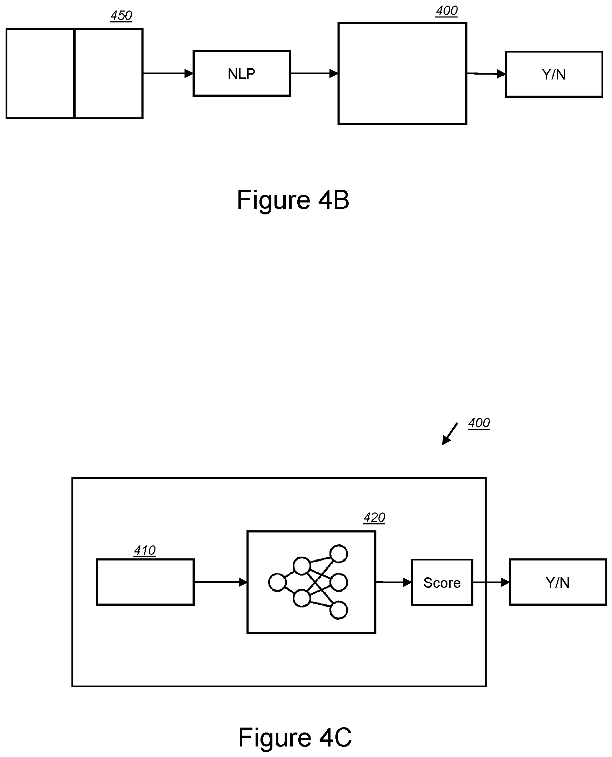

Figure 4B is a diagram showing how a trained classification model 400 can be implemented, by receiving new change requests 450 having text descriptions 460 and processing these change requests through a natural language processing module and a trained classification model 400 so as to perform an automated validation check for new change requests.

Figure 4C is a diagram showing the structure of a trained classification model 400 having a tree architecture. The model 400 may be configured to process a feature vector 410, which may be formed from the extracted text features and a vector representing a change justification category. The model 400 also includes a plurality of decision trees 420, which process the feature vector 410 to output a plurality of classification decisions. The model 400 calculates a score based on an aggregation of the classification decisions and determines whether the change request passes or fails the validation check based on a predetermined threshold.

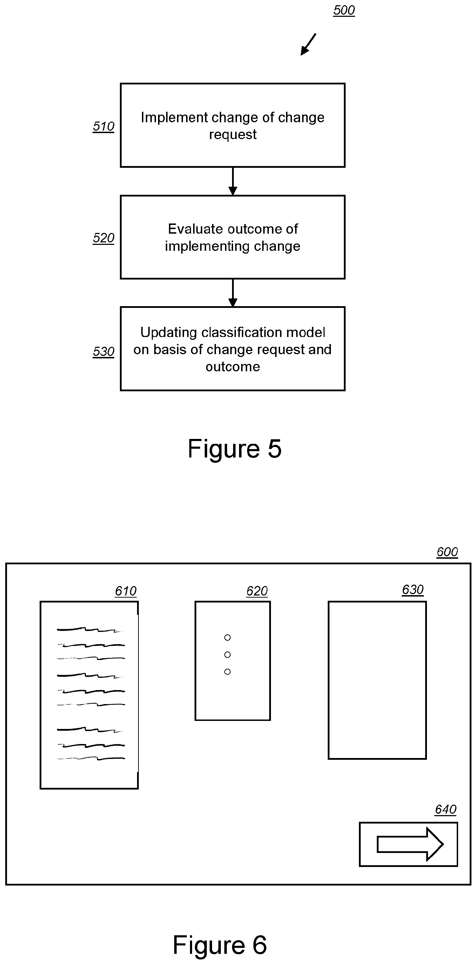

Figure 5 is a flowchart illustrating the steps involved in updating the classification model 500 based on the outcome of the implemented change. The process 500 begins with implementing the change associated with the change request (step 510). The process 500 then evaluates the outcome resulting from implementing the change (step 520) and updates the classification model based on the evaluated outcome (step 530). This may include adding a label to the change request, and passing the change request along with the new label (Pass/Fail) to the classification model.

Figure 6 is an example of a user interface 600 for submitting a change request and receiving feedback or suggestions. The user interface 600 includes a text description input field 610, a change justification category selection 620, a submit button 630, and a feedback or suggestions display 640. The user can input the text description and select the change justification category, then submit the change request using the submit button 630. If the change request fails the validation check, the feedback or suggestions display 640 provides information to the user on how to revise the text description or address any issues identified by the classification model.

Further details about various components and steps of Figure 1 to Figure 6 are described in the sections below.

### Change Request Input and Natural Language Processing

In one example, the automated validation system comprises a change request input component 110 and a natural language processing (NLP) component 120. The change request input component 110 is configured to receive a change request from a user, which includes a text description justifying a change in hardware and/or software within the computing environment. The change request input component 110 may also comprise a change justification category, such as first-party driven, oversight, third-party driven, security or safety threat, or any other suitable category. The inclusion of the change justification category can provide additional context for the validation process, allowing the system to better understand the reasons behind the proposed change and assess its validity more accurately.

In some examples, the text description provided by the user in the change request input component 110 is a detailed explanation of the proposed change, including the reasons for the change, the expected benefits, and any potential risks or drawbacks. The text description may be written in natural language, allowing the user to express their thoughts and ideas in a clear and concise manner. The change justification category, on the other hand, is a predefined classification that indicates the primary reason for the change in hardware and/or software within the computing environment. By providing both the text description and the change justification category, the system can gain a more comprehensive understanding of the change request, which can lead to a more accurate validation outcome.

In some examples, the natural language processing (NLP) component 120 is configured to process the text description received from the change request input component 110 and extract one or more text features from the text description. The NLP component 120 may apply various techniques to extract the text features, such as tokenization, stopword removal, stemming, text cleaning, part-of-speech tagging, named entity recognition, sentiment analysis, Term Frequency-Inverse Document Frequency (TF-IDF) analysis, dictionary counter, and regular expression counter.

The extraction of text features using NLP techniques can provide several advantages. For instance, the extracted text features can be used to create a feature vector that represents the change request, which can then be input into the trained classification model 130 for validation. Additionally, the use of NLP techniques can help to identify and extract relevant information from the text description, such as keywords, phrases, and entities, which can be used to better understand the context and content of the change request. This can lead to a more accurate and efficient validation process, as the system can focus on the most relevant aspects of the change request when determining its validity.

In some examples, the NLP component 120 may also process the change justification category provided by the user in the change request input component 110. The NLP component 120 may apply a one-hot encoding technique to the change justification category to generate a vector representing the change justification category. This vector can then be combined with the extracted text features to form a feature vector that represents the change request. By including the change justification category in the feature vector, the system can take into account the primary reason for the proposed change when performing the validation check, which can lead to a more accurate and context-aware validation outcome.

### Trained Classification Model and Validation Check

In one example, the automated validation system comprises a trained classification model 130 that is used to perform a validation check on the change request received from the user. The classification model 130 is trained on a dataset of historical change requests, which may include data related to the performance of one or more changes associated with one or more change requests that were submitted previously. The trained classification model 130 is designed to analyse the extracted text features from the natural language processing component 120 and determine whether the change request passes or fails the validation check.

In some examples, the classification model 130 is trained on a dataset of historical change requests. Each change request in the dataset may have been pre-labelled as either passing or failing the validation check. This pre-labelling allows the classification model 130 to learn from the historical data and improve its ability to accurately determine the outcome of the validation check for new change requests. The dataset of historical change requests may comprise data related to the performance of one or more changes associated with one or more change requests that were submitted previously. This data may be used to further refine the classification model 130 and improve its accuracy in determining the outcome of the validation check.

In some examples, the classification model 130 may comprise a random forest algorithm. The random forest algorithm is an ensemble learning method that constructs a multitude of decision trees 420 at training time and outputs the class that is the mode of the classes (classification) or mean prediction (regression) of the individual trees. The random forest algorithm is particularly advantageous for this application because it can handle large datasets with high dimensionality, is resistant to overfitting, and can provide an estimate of the importance of each feature in the classification process.

The decision trees 420 in the random forest algorithm process the feature vector 410, which may be formed from the extracted text features and a vector representing a change justification category. Each decision tree 420 outputs a classification decision based on the feature vector 410. The random forest algorithm then aggregates the classification decisions from all the decision trees 420 to calculate a score. This score is used to determine whether the change request passes or fails the validation check based on a predetermined threshold.

In one example, the trained classification model 130 performs a validation check on the change request by applying the random forest algorithm to the extracted text features from the natural language processing component 120. The validation check outcome 140 determines whether the change request passes or fails the validation check based on the results from the trained classification model 130.

If the change request fails the validation check, the outcome 140 prevents submission of the change request and may generate feedback, suggestions, or prompts for the user to revise the text description. This feedback can help the user understand why the change request failed the validation check and provide guidance on how to improve the text description to increase the likelihood of passing the validation check in the future.

If the change request passes the validation check, the outcome 140 allows submission of the change request and may implement the change associated with the change request. This streamlined process can help reduce the time and effort required to review and approve change requests, leading to more efficient management of changes within the computing environment.

In some examples, the validation check outcome 140 may also update the classification model 130 based on the outcome of the implemented change. This continuous updating process can help improve the accuracy and effectiveness of the classification model 130 over time, as it learns from the outcomes of previous change requests and adapts to the evolving needs of the computing environment.

In some examples, the automated validation system handles failed validation checks by preventing the submission of the change request and generating feedback, suggestions, or prompts for the user to revise the text description or address any issues identified by the classification model. This section describes the process of handling failed validation checks and its various aspects, including preventing submission, generating feedback, providing suggestions, and prompting user revision.

### Preventing Submission and Generating Feedback

In one example, when the validation check outcome 140 determines that the change request has failed the validation check, the system prevents the submission of the change request into a queue of change requests and/or implementation of the change associated with the change request. This can be achieved by limiting relevant access control to the user, requesting manual approval of the change associated with the change request, or any other suitable method.

In addition to preventing submission, the system may generate and output feedback regarding why the change request failed the validation check based on attributes identified by the trained classification model 130 as contributing to the failure. This feedback can help the user understand the reasons for the failure and guide them in revising the text description or addressing any issues identified by the classification model.

In some examples, the system may also generate suggestions for revising the text description of the change request based on identified features by the trained classification model 130 as contributing to the failure determination. These suggestions can be specific to the text description or the change justification category, and can help the user improve the quality of their change request by addressing the issues identified by the classification model.

Furthermore, the system may output a prompt to the user to revise the text description of the change request, encouraging the user to take action and make necessary adjustments to their change request before resubmitting it. This prompt can be displayed on the user interface 600, for example, in the feedback or suggestions display 640.

The process of handling failed validation checks, as described above, provides several advantages. By preventing the submission of change requests that fail the validation check, the system can reduce the risk of implementing changes that may have negative consequences on the computing environment. This can lead to improved stability and security of the computing environment, as well as reduced costs associated with addressing issues caused by poorly justified changes.

Additionally, by providing feedback, suggestions, and prompts for user revision, the system can help users improve their change requests and increase the likelihood of successful validation checks in the future. This can lead to a more efficient change management process, as users become more skilled at justifying their change requests and addressing potential issues before submission.

In some examples, the automated validation system may comprise additional optional features to further enhance the handling of failed validation checks. For example, the system may include a machine learning component that learns from the feedback and suggestions provided to users, allowing the system to continuously improve its ability to identify issues in change requests and provide more accurate and helpful feedback over time.

### Handling Passed Validation Checks

In one example, the automated validation system 100 handles passed validation checks by allowing the submission of the change request and implementing the change associated with the change request. This section describes the process of handling passed validation checks, including allowing submission and implementing change, and updating the classification model based on the outcome.

In some examples, when the validation check outcome 140 determines that the change request passes the validation check based on the results from the trained classification model 130, the system 100 allows the submission of the change request. This may involve enabling the user to submit the change request into a queue of change requests by permitting relevant access control to the user. Allowing the submission of the change request when it passes the validation check can help ensure that only valid and well-justified changes are implemented in the computing environment, thereby reducing the risk of negative impacts on the system and improving overall system stability and security.

Once the change request has been submitted, the system 100 may proceed to implement the change associated with the change request. This can involve updating the hardware and/or software within the computing environment according to the specifications provided in the change request. Implementing the change can help maintain the computing environment's functionality, performance, and security, as well as address any identified issues or improvements.

In some examples, after the change associated with the change request has been implemented, the system 100 updates the trained classification model 130 based on the outcome resulting from implementing the change. This can involve evaluating the success or failure of the implemented change, as well as any impacts on the computing environment, such as performance, stability, or security.

The system 100 may then use this evaluated outcome to update the classification model 130, which can involve adjusting the model's parameters, retraining the model with new data, or incorporating the outcome into the dataset of historical change requests used for training the model. Updating the classification model based on the outcome can help improve the model's accuracy and effectiveness in validating future change requests, as it allows the model to learn from the results of implemented changes and adapt to any changes in the computing environment or the types of change requests being submitted.

By continuously updating the classification model based on the outcomes of implemented changes, the system 100 can maintain a high level of accuracy and effectiveness in validating change requests, ensuring that only well-justified and valid changes are implemented in the computing environment. This can lead to improved system stability, security, and performance, as well as reduced risk of negative impacts from poorly justified or invalid changes.

### User Interface for Change Request Submission and Feedback

In one example, the user interface 600 for change request submission and feedback is designed to facilitate the process of submitting change requests and receiving feedback or suggestions based on the automated validation system. The user interface 600 provides an intuitive and user-friendly platform for users to input the necessary information for a change request, such as the text description and change justification category, and to receive feedback or suggestions in case the change request fails the validation check.

In some examples, the user interface 600 may comprise a text description input field 610, a change justification category selection 620, and a submit button 630. The text description input field 610 allows users to input a detailed description justifying the change in hardware and/or software within the computing environment. This text description serves as the basis for the natural language processing component 120 to extract text features and perform the validation check using the trained classification model 130.

The change justification category selection 620 provides users with a list of predefined categories to choose from, such as first-party driven, oversight, third-party driven, security or safety threat, or any other suitable category. This selection helps the trained classification model 130 to better understand the context of the change request and improve the accuracy of the validation check.

The submit button 630 enables users to submit the change request for validation once they have provided the necessary information in the text description input field 610 and selected the appropriate change justification category 620. Upon submission, the automated validation system processes the change request and determines the outcome of the validation check.

In some examples, the user interface 600 may comprise a feedback or suggestions display 640. This display is designed to provide users with valuable information on how to revise the text description or address any issues identified by the classification model in case the change request fails the validation check.

The feedback or suggestions display 640 may present the reasons for the failure of the validation check based on the attributes identified by the classification model 130 as contributing to the failure. This information helps users to understand the specific issues with their change request and make the necessary revisions to improve the chances of passing the validation check in a subsequent submission.

Additionally, the feedback or suggestions display 640 may provide users with suggestions for revising the text description based on the features identified by the classification model 130 as contributing to the failure determination. These suggestions can guide users in modifying their text description to better align with the requirements of the automated validation system and increase the likelihood of passing the validation check.

In some examples, the feedback or suggestions display 640 may also output a prompt to the user to revise the text description of the change request. This prompt serves as a reminder for users to make the necessary revisions before resubmitting the change request for validation.

The user interface 600, with its input fields, selection options, and feedback display, provides a comprehensive platform for users to submit change requests and receive valuable feedback or suggestions in case of validation check failures. This facilitates a more efficient and effective change request process, ultimately leading to better management of updates to the computing environment.

### Computing Device Implementation

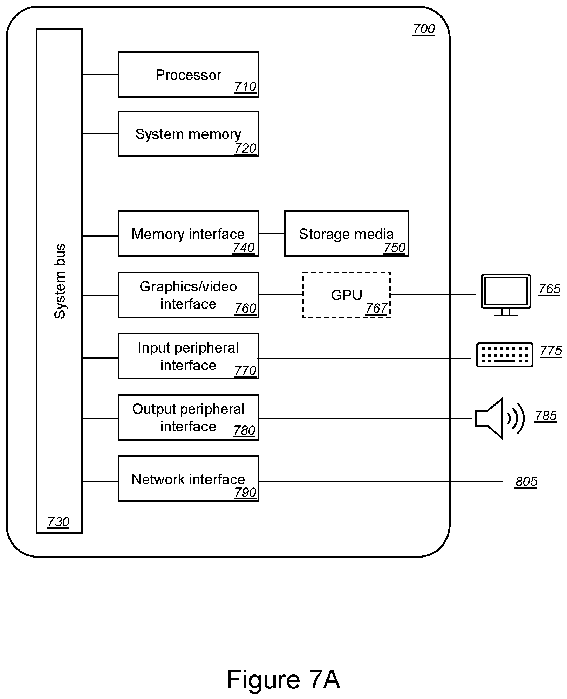

Figure 7A shows an example computing device 700 in which the methods of the invention may be implemented. Computing device 700 may be embodied as any type of computer, including a server, a desktop computer, a laptop, a tablet, a mobile device, or the like.

Components of computing device 700 include, but are not limited to, a processor 710, such as a central processing unit (CPU), system memory 720, and system bus 730. System bus 730 provides communicative coupling for various components of computing device 700, including system memory 720 and processor 710. System bus 730 may be or may include an address bus, data bus or control bus. Example system bus architectures include parallel buses, such as Peripheral Component Interconnect (PCI) and Integrated Drive Electronics (IDE), and serial buses, such as PCI Express (PCIe) and Serial ATA (SATA).

System memory 730 is formed of volatile and/or non-volatile memory such as read only memory (ROM) and random-access memory (RAM). ROM is typically used to store a basic input/output system (BIOS), which contains routines that boots the operating system and sets up the components of computing device 100, for example at start-up. RAM is typically used to temporarily store data and/or program modules that the processor 710 is operating on.

Computing device 700 includes other forms of memory, including (computer readable) storage media 745, which is communicatively coupled to the processor 710 through a memory interface 740 and the system bus 730. Storage media 745 may be or may include volatile and/or non-volatile media. Storage media 745 may be or may include removable or non-removable storage media. Storage media 745 may be within computing device 700 or external to computing device 700. Examples storage media 745 technologies include: semiconductor memory, such as RAM, flash memory, solid-state drives (SSD); magnetic storage media, such as magnetic disks; and optical storage, such hard disk drives (HDD) and CD, CD-ROM, DVD and BD-ROM. Data stored in storage medium 745 may be stored according to known methods of storing information such as computer readable instructions, data structures, program modules or other data, the form of which is discussed further herein.

In some embodiments, such as the one shown in Figure 7A, computing device 700 is communicatively coupled to an external display device 755 via a graphics/video interface 750 and system bus 730. Alternatively, computing device 700 may have an integrated display (not shown) which is communicatively coupled via the graphics/video interface 750 and system bus 730. Optionally, a graphical processing unit 757 (GPU) may be used in addition to improve graphical and other types of processing.

Computing device 700 also includes an input peripheral interface 760 and an output peripheral interface 770 that are communicatively coupled to the system bus 730. Input peripheral interface is communicatively coupled to one or more input devices 765, for interaction between the computing device 700 and a human operator. Example input devices 765 includes a keyboard, a mouse, a touchscreen, and a microphone. In some embodiments, the touchscreen and display may use the same screen. Output peripheral interface 770 is communicatively coupled to one or more output devices 775. Example output devices 775 includes speakers and a printer. The communicative coupling may be wired, such as via a universal serial bus (USB) port, or wireless, such as over Bluetooth.

Computing device 700 operates in a networked or distributed environment using at least one communication network 805 to one or more remote computers. The one or more remote computers may be a personal computer, a server, a router, a peer device, a mobile device, a tablet, or other common network node, and typically includes many or all of the components described above relative to computer system 700. The at least one communication network 805 typically includes at least the Internet. Other communication networks 805 may be used including a local area network (LAN) and/or a wide area network (WAN). Further communication networks may be present in various types of computing device 700, such as mobile devices and tablets, to cellular networks, such as 3G, 4G LTE and 5G. Computing device 700 establishes communication with network environment 800 through network interface 780. In a networked environment, program modules depicted relative to computer system 700, or portions thereof, may be stored in the remote memory storage device.

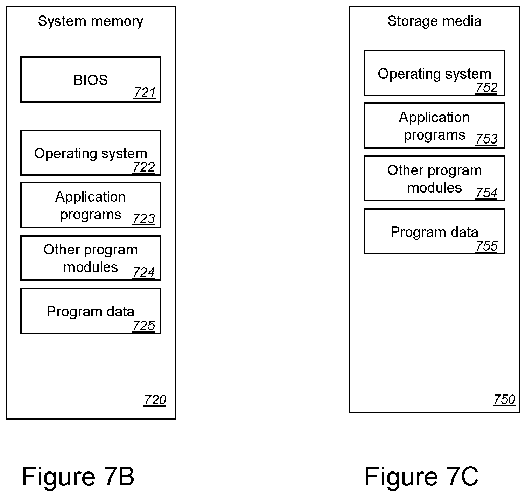

As shown in Figure 7B a number of program modules are stored on the system memory 720, including an operating system 722, one or more application programs 723, other program modules 724, and program data 725. Similarly, as shown in Figure 7C, storage media 750 stores one or more application programs 753, other program modules 754, and program data 755.

In one implementation, the methods of the invention may be implemented as an application program 723 that is stored in storage media 750. The advantage of implementing the methods of the invention in this way is that the application program 723 can be implemented on existing computing systems 700. However, in general, when implemented this way, the application program 723 usually has to be manually chosen to process processing tasks. Any input data or dataset may be received via network interface 790 and stored in the storage media 750. Any output data or dataset may be sent elsewhere via network interface 790. The processing of the steps in between are performed by processor 710 in conjunction with the application program 723. System memory 720 may be used to store temporary or transitory data relating to the application program 723.

In another implementation, the methods of the invention may be implemented in the operating system 722 that is stored on system memory 720.

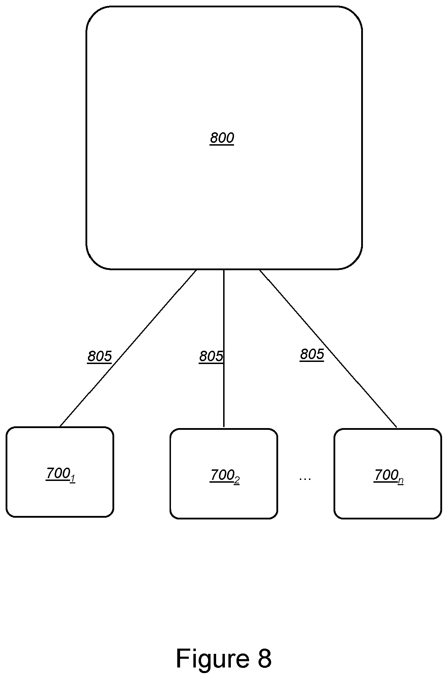

As shown in Figure 8, shows a generic hardware architecture which can used to implement the present invention. The architecture can include one or more servers 801, which are accessible one or more electronic devices 802. The servers can be physical servers at a certain location, or can be virtual servers positioned in a cloud computing architecture. There is also provided a memory 803 connected to the one or more servers, which is configured to store one or more lines of code which can be sent to the servers for the sake of updating or adding software running on one or more of the servers.

The flow diagrams in the figures illustrate the architecture, functionality, and operation of possible implementations of the methods of the invention. In some alternative implementations, the steps noted in the figures may occur out of the order noted in the figures. For example, two steps shown in succession may, in fact, be performed substantially concurrently, or the blocks may sometimes be performed in the reverse order, depending upon the functionality involved.

The terminology used herein is for the purpose of describing particular aspects only and is not intended to be limiting of the disclosure. As used herein, the singular forms "a," "an," and "the" are intended to include the plural forms as well, unless the context clearly indicates otherwise. As used herein, the term "and/or" includes any and all combinations of one or more of the associated listed items. It will be further understood that the terms "comprises," "comprising," "includes," and/or "including" when used herein specify the presence of stated features, integers, actions, steps, operations, elements, and/or components, but do not preclude the presence or addition of one or more other features, integers, actions, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

Unless otherwise defined, all terms (including technical and scientific terms) used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealized or overly formal sense unless expressly so defined herein.

It is to be understood that the present disclosure is not limited to the aspects described above and illustrated in the drawings; rather, the skilled person will recognize that many changes and modifications may be made within the scope of the present disclosure and appended claims. In the drawings and specification, there have been disclosed aspects for purposes of illustration only and not for purposes of limitation, the scope of the disclosure being set forth in the following claims.

### Exemplary Training Data Set

The classification model of the present invention is trained by providing a dataset of historical change requests to the model. In some embodiments, a training data set is provided to the model, where the training data set comprises: a plurality of training data feature vectors, each training data feature vector corresponding to a textual description associated with a historical change request, and wherein each training data feature vector is labelled.

In some embodiments, each of the training data feature vectors comprises at least features X, Y and Z.

In some further embodiments, feature X comprises a character length of the textual description, feature Y comprises an indication of grammatical correctness, and feature Z comprises an indication of a type of change requested associated with the textual description.

In some embodiments, each training data feature vector labelled based at least on features X, Y, and Z. The classification model may therefore be configured to be trained at least on the basis of features X, Y, and Z.

In some embodiments, there may be at least 500 training data feature vectors in the plurality of training data feature vectors. In any case, any number of training data feature vectors can be used for training the model.

An exemplary training data set, which could be used to train a reproducible and functional classification model is provided below. Of course, the accuracy of a model can be vastly improved by providing additional data, introducing grammatical errors into the data and labelling grammatically incorrect passages approximately, etc.

| **TEXTUAL DESCRIPTION OF CHANGE REQUEST** | **VALIDATION CHECK LABELS** |
|---|---|
| This software update addresses a critical vulnerability that was recently discovered in the software's authentication mechanism. By implementing stronger encryption algorithms and enhancing the authentication process, this update ensures that user credentials and sensitive data are securely protected. It also includes additional layers of security, such as multi-factor authentication, to further fortify the software against unauthorized access attempts. Embracing this update is crucial to safeguarding the integrity and confidentiality of user information. | PASS |
| This software update improves security measures, protecting user data and preventing unauthorized access. | FAIL |
| In response to user feedback, this update introduces a new code editor with advanced features and a more intuitive user interface. The editor supports syntax highlighting, code completion, and error detection, enhancing your coding experience and reducing the likelihood of syntax errors. It also integrates with popular version control systems, enabling seamless collaboration with team members and facilitating efficient code reviews. | PASS |
| This software update enhances the code editor, providing advanced features and improving the coding experience. | FAIL |
| To optimize performance and speed up execution, this update introduces a new caching mechanism that stores frequently accessed data in memory. By reducing the need to fetch data from the disk, the software experiences significant performance improvements, resulting in faster response times and smoother operation. This caching mechanism is configurable, allowing you to fine-tune its behaviour based on your specific requirements and workload. With this update, you can expect a noticeable boost in the efficiency of your software applications and reduced resource consumption. | PASS |
| This software update implements a caching mechanism, resulting in improved performance and reduced resource usage. | FAIL |
| This update introduces compatibility with the latest version of a popular programming framework, enabling you to leverage its new features and enhancements. It provides seamless integration with the framework's APIs, allowing you to harness its power and flexibility in your software development. By embracing this update, you gain access to a vibrant ecosystem of plugins, libraries, and community support that can accelerate your development process, simplify complex tasks, and expand your programming capabilities. | PASS |
| This software update adds compatibility with a popular programming framework, unlocking new features and expanding your development options. | FAIL |
| This software update improves database management, enabling scalability and ensuring high availability. | FAIL |
| In response to scalability concerns, this update enhances the software's database management capabilities. It introduces database sharding, allowing you to distribute large datasets across multiple servers, thereby improving query performance and accommodating growing data volumes. The update also implements database replication to ensure high availability and fault tolerance. With these enhancements, you can confidently scale your applications, handle increased user loads, and maintain data consistency, all while delivering a seamless user experience. | PASS |

## Claims

1. A computer-implemented method for handling updates to a computing environment, the method comprising:
receiving, from a user, a change request comprising a text description justifying a change in hardware and/or software within the computing environment;
applying natural language processing to the text description to extract one or more text features from the text description;
performing a validation check of the received change request by applying a trained classification model to the extracted one or more text features, the classification model having been trained on a dataset of historical change requests; and
if the received change request fails the validation check, preventing submission of the change request into a queue of change requests and/or implementation of the change associated with the change request.

2. The method according to claim 1, wherein the extracted one or more text features form part of a feature vector, and wherein applying the trained classification model to the extracted one or more text features comprises applying the trained classification model to the feature vector.

3. The method according to claim 2, wherein a vector representing a change justification category further forms part of the feature vector, the change justification category indicating a reason for the change in hardware and/or software within the computing environment.

4. The method according to claim 3, wherein the received change request comprises the change justification category, wherein the method further comprises applying a one-hot encoding to the change justification category to generate the vector representing the change justification category.

5. The method according to claim 4, wherein the change justification category of a respective change request is one of: first-party driven, oversight, third-party driven, and security or safety threat.

6. The method according to any one of the preceding claims, wherein each change request in the dataset of historical change requests have has been pre-labelled as either passing or failing the validation check.

7. The method according to any one of the preceding claims, wherein the dataset of historical change requests comprises data related to the performance of one or more changes associated with one or more change requests that were submitted previously.

8. The method according to any one of the preceding claims, wherein preventing submission of the change request into a queue of change requests and/or implementation of the change associated with the change request comprises at least one of: limiting relevant access control to the user and requesting manual approval of the change associated with the change request.

9. The method according to any one of the preceding claims, further comprising, if the received change request fails the validation check, performing at least one of:
generating and outputting feedback regarding why the change request failed the validation check based on attributes identified by the classification model as contributing to the failure;
generating a suggestion for revising the text description of the change request based on identified features by the classification model as contributing to the failure determination; and
outputting a prompt to the user to revise the text description of the change request.

10. The method according to any one of the preceding claims, further comprising, if the received change request passes the validation check, enabling the user to submit the change request into the queue of change requests by permitting relevant access control to the user.

11. The method according to any one of the preceding claims, wherein the classification model comprises a random forest algorithm, and performing the validation check of the received change request comprises:
processing the extracted one or more text features by each of a plurality of decision trees in the random forest algorithm so as to output a plurality of classification decisions; calculating a score based on an aggregation of the plurality of classification decisions; and
determining that the change request passes the validation check if the calculated score meets a predetermined threshold, or determining that the change request fails the validation check if the calculated score does not meet the predetermined threshold.

12. The method according to any one of the preceding claims, wherein applying natural language processing comprises at least one of:
applying a regular expression replacer to the text description,
performing tokenisation of the text description,
performing stopword removal of the text description,
performing stemming of the text description,
performing text cleaning of the text description,
performing part-of-speech tagging of the text description,
performing named entity recognition of the text description,
performing sentiment analysis of the text description,
performing Term Frequency-Inverse Document Frequency analysis of the text description,
applying a dictionary counter to the text description, and
applying a regular expression counter to the text description.

13. The method according to any one of the preceding claims, further comprising, if the received change request passes the validation check, implementing the change associated with the change request.,

14. The method according to claim 13, wherein the method further comprises: updating the classification model based on an outcome resulting from implementing the change associated with the change request.

15. A computing environment comprising:
one or more computing systems communicatively coupled to each other; and
at least one processing system configured to perform the steps of any preceding claim.
